# EUROPEAN PATENT APPLICATION

(11) **EP 2 217 010 A1**
(43) Date of publication of application: **11.08.2010**
(21) Application number: 07816734.3
(22) Date of filing: 02.11.2007
(51) Int. Cl.: H04W 4/00

(54) **SYSTEM AND METHOD FOR TRANSMITTING INTERACTIVE DATA BETWEEN NEIGHBOR BSS VIA MS**

(71) Applicant: Alcatel Lucent, 75008 Paris (FR)
(72) Inventor: SHEN, Gang, Shanghai 201206 (CN); NI, Wei, Shanghai 201206 (CN); WANG, Dongyao, Shanghai 201208 (CN); JIN, Shan, Shanghai 201206 (CN)
(74) Representative: Kohler Schmid Möbus
(86) International application number: PCT/CN2007/003121
(87) International publication number: WO 2009/055973

(57) **Abstract**

The present invention provides a system for transmitting interacting data between neighboring BSs via a MS and a method thereof. The system comprises a first BS which transmits the interacting data to the MS, and a MS which receives the interacting data from the first BS and transmits the received interacting data to a second BS that neighbors to the first BS. The invention also provides a communication system and a method thereof, wherein a MS communicates with a first BS using an established first communication channel, and the MS communicates with the second BS using an established second communication channel. The system of the invention uses a MS within the overlapped coverage area of neighboring BSs to perform transmission of interacting data such as control information for coordination, so as to reduce latency required for interacting data transmission between neighboring BSs. Compared to legacy BS coordination via a backbone, the BS coordination via a MS of the invention is predictable and requires less latency.

## Description

### BACKGROUND OF THE INVENTION

### 1. Field of the Invention

The present invention relates to the field of wireless communications, and in particular to a system for transmitting interacting data between neighboring BSs (Base Stations) via a MS (Mobile Station) and a method thereof. This invention also relates to a communication system and a method thereof.

### 2. Description of the Prior Art

IMT-Advanced next generation mobile networks have raised requirements on system capability. Some standard groups or organizations are actively developing drafts to meet the requirements, and expecting their drafts to be candidates for consideration in the IMT-Advanced evaluation process. IEEE802.16m task group which was recently launched aims to make some amendment to IEEE Std 802.16, in order to provide an advanced air interface with performance improvements for operation in licensed bands. It targets the cellular layer requirements of IMT-Advanced next generation mobile networks.

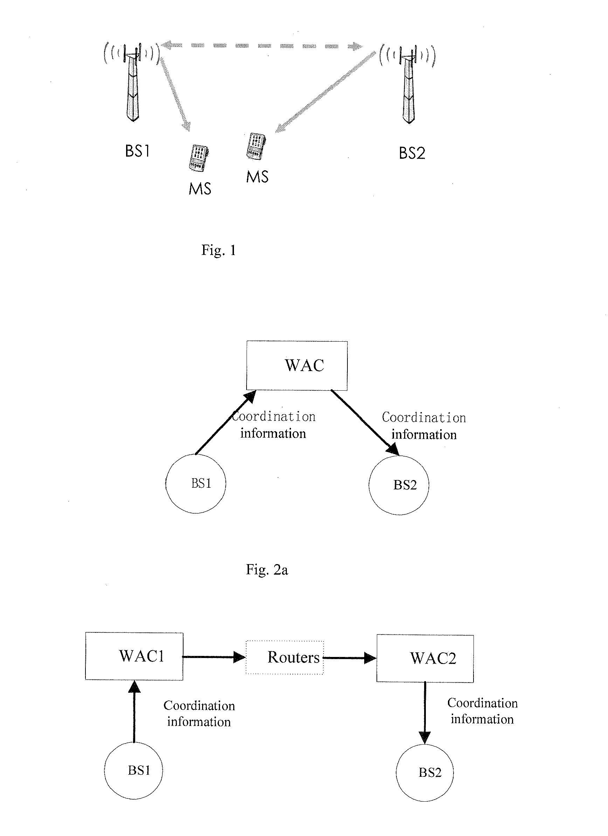

With the technical development targeting IMT-Advance, neighboring BSs are required to collaborate with each other with adoption of some new techniques. Neighboring BS coordination for control information exchange is getting more and more important and frequent, which is performed such that BS exchanges some control information, channel information, or request / response messages with its neighboring BSs for collaboration. This coordination is necessary for lots of functionalities in mobile communications, such as fast handover, network MIMO (Multi-Input Multi-Output), interference cancellation, fragment resource reuse, MBS etc. For example, during a handover the serving BS has to negotiate with neighboring BSs for a potential candidate of Target BS, to check if any of the neighboring BSs would like to accept a moving MS or not. Fig. 1 is a schematic diagram of neighboring BS coordination for control information exchange according to the conventional method.

During the handover, the serving BS sends to a neighboring BS a pre-notification request including MS context configuration information, and the neighboring BS sends back a response including service level predication with estimated HO time and HO optimization. Upon the completion of the handover, the target BS also sends to the old serving BS a notification indicating that it is now hosts the MS in order that the old serving BS may release all MS resources. Another example is neighboring BS coordination for interference cancellation, or fragment resource reuse. Some time-frequency scheduling information should be exchanged and shared among neighboring BSs for the purpose of interference cancellation or resource reuse.

An example of data information exchange between neighboring BSs is that a BS transmits data to be downlink transmitted to a MS to a neighboring BS via a backbone. Such technique can be applied to MBS (Multicast Broadcast Service).

The latency requirement has been raised for neighboring BS control coordination. Less latency can decrease possible service interruption and improve the performance.

Existing neighboring BS coordination for control information exchange is transmitted via a backbone. For example, neighboring BS negotiation message pre-notification request / response for handover are exchanged via the backbone. The backbone is suitable for massive data transmission due to its higher transmission capability. However, the coordination message transmission routing and latency are highly dependent on the BSs' locations and on what clusters they belong to. The transmission latency is thus unpredictable. It may last a longer time period if the involved BSs do not belong to a single cluster. A cluster is typically defined such that neighboring BSs is subordinate to the same controller. For example, if BSs belong to the same WAC in WiMAX, or belong to the same RNC in 3GPP, they belong to the same cluster.

Exemplified in WiMAX network, the routing and latency are different for neighboring BS control information exchange, depending on whether the coordinated BSs belong to the same WAC or not. Fig. 2(a) illustrates control information exchange between BSs subordinate to a single WAC. The control messages are exchanged and forwarded via the common WAC, and thus subjected to less latency.

On the other hand, Fig. 2(b) illustrates control information exchange between BSs subordinate to different WACs. For the purpose of coordination, BS1 first transmits control information to its own WAC 1. Then, the information may be forwarded by routers from the WAC1 to WAC2, and may also experience IP encapsulation / encapsulation. When the information reaches the WAC2 to which the neighboring BS is subordinate, the WAC2 continues to forward it to the destination BS2. As can be seen from this procedure, the total latency may include transmitting delay, routing / switching delay, and possibly encapsulation / encapsulation delay. Consequently, the total latency for control information transmission is unpredictable.

In summary, the latency for control information exchange between neighboring BS via a backbone is unpredictable, depending on neighboring BSs' locations and on which cluster they belong to. It may require a longer time delay if the involved BSs belong to different clusters (i.e. the BSs belong to different WACs in WiMAX).

With tougher requirements on time delay for fast handover, network MIMO, interference cancellation, etc., neighboring BS coordination is getting more important and frequent.

### SUMMARY OF THE INVENTION

Currently, there is no real direct BS-BS connection for coordination. To solve the above problems, the present invention is provided to implement a direct BS-BS connection via a MS. According to this invention, a system for transmitting interacting data between neighboring BSs via a MS and a method thereof are provided. With the system and method, the invention can enable transmission of interacting data such as control information for BS coordination, and a bi-directional coordination. With a MS within the overlapped coverage area of the neighboring BSs performing merely simple transmission operation, the latency of control information exchange can be reduced and become predictable. The BSs is in charge of establishment of control channel and transmission. Compared to the legacy BS coordination via a backbone, the interacting data transmission for BS coordination via a MS is predictable and less latency.

According to a first aspect of the present invention, a system for transmitting interacting data between neighboring BSs via a MS is provided, comprising: a first BS which transmits the interacting data; and a MS which receives the interacting data from the first BS and transmits the received interacting data to a second BS that neighbors to the first BS.

According to a second aspect of the present invention, a method of transmitting interacting data between neighboring BSs via a MS is provided, comprising: transmitting from a first BS to a MS the interacting data; and transmitting from the MS to a second BS that neighbors to the first BS the interacting data received from the first BS.

According to a third aspect of the present invention, a communication system is provided, comprising: a MS; a first BS which establishes a first communication channel used for the communication with the MS; and a second BS which establishes a second communication channel used for the communication with the MS; wherein the MS communicates with the first BS using the established first communication channel and communicates with the second BS using the established second communication channel.

According to a fourth aspect of the present invention, a communication method is provided, comprising: communicating by a MS with a first BS using an established first communication channel; and communicating by the MS with a second BS using an established second communication channel.

According to a fifth aspect of the present invention, a MS for transmitting interacting data between neighboring BSs is provided, comprising: a control unit which controls the transmission of interacting data which is received from a first BS; a receiving unit which receives the interacting data from the first BS; and a sending unit which transmits the interacting data received from the first BS to a second BS.

According to a sixth aspect of the present invention, a BS interacting with neighboring BS is provided, comprising: a BS coordination unit which controls the transmission of interacting data between neighboring BSs to a MS; a BS transmitting unit which transmits interacting data to the MS; and a BS receiving unit which receives data.

### BRIEF DESCRIPTION OF THE DRAWINGS

Fig. 1 is a schematic diagram of neighboring BS coordination for control information exchange according to the conventional method.
Fig. 2a shows control information exchange between neighboring BSs subordinate to a single WAC.
Fig. 2b shows control information exchange between BSs subordinate to different WACs.
Fig. 3a shows a system for transmitting interacting data between neighboring BSs via a MS according to the present invention.
Fig. 3b shows a flowchart for a method of transmitting control information for neighboring BS coordination via a MS according to the present invention.
Fig. 4a is a schematic block diagram of a BS according to the present invention.
Fig. 4b is a schematic block diagram of a MS according to the present invention.
Fig. 5 is an example of a frame structure for channel assignment according to the present invention.
Fig. 6 is a schematic diagram of bi-directional channels between MS and BS according to the present invention.

### DETAILED DESCRIPTION OF THE PREFERRED EMBODIMENTS

Hereinafter, preferred embodiments of the present invention will be described with reference to the accompanying drawings, throughout which like components are denoted with like symbols or numbers. In the following description of the present invention, a detailed description of known functions and configurations incorporated herein will be omitted, otherwise it may obscure the subject matter of the present invention.

The total latency for control information transmission is not predictable due to the conventional wired transmission of the control information between the neighboring BSs. Therefore, there may be a long latency. This is unacceptable to communications which require less latency.

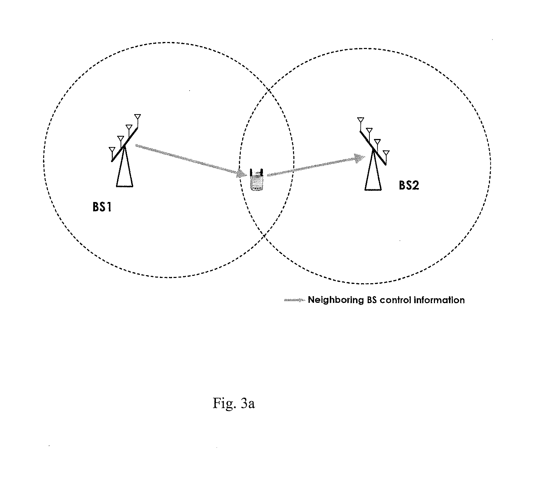

This invention provides a scheme of BS-BS data transmission via a MS. That is, interacting data between neighboring BSs is transmitted via a MS. The interacting data comprises data to be transmitted between neighboring BSs, such as user data (for example, data to be transmitted to a MS within the coverage area of the neighboring BSs, or data sent by a MS within the coverage area of the neighboring BSs), and control information for neighboring BS coordination. Fig. 3a shows a system for transmitting interacting data between neighboring BSs via a MS according to the present invention. Referring to Fig. 3a, a MS is located within the overlapped coverage of two neighboring BSs. BS1 first sends interacting data for its neighboring BSs to the MS, and the MS then transmits the interacting data to one of the neighboring BSs, BS2. For example, the BS1 sends to the MS control information for neighboring BS coordination. Then, the MS forwards the received control information to the BS2. One skilled in the art can appreciate that there can be one or more BS2. The transmission of the interacting data of neighboring BSs, e.g., control information exchange, is performed via a MS, instead of a main backbone that has an unpredictable routing and a long latency. Therefore, the total latency of data transmission can be decreased.

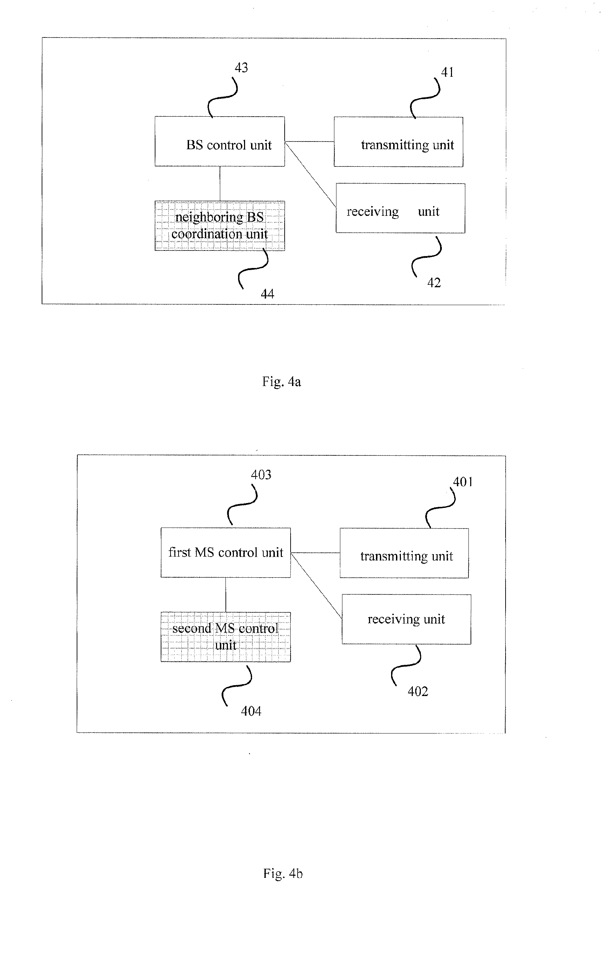

Fig. 4a is a schematic block diagram of a BS according to this invention. The BS comprises a transmitting unit 41, a receiving unit 42, a neighboring BS coordination unit 44 and a BS control unit 43. The transmitting unit 41 transmits data, such as control information for neighboring BS coordination, to a MS within the coverage area of the cell the BS belongs to. The receiving unit 42 receives data sent from a MS within the coverage area of the cell or data sent from neighboring BSs. The BS control unit 43 controls the transmitting/receiving and processing of data and also controls the MS within the coverage area. The neighboring BS coordinating unit 44 identifies the MS within the overlapped coverage area of the BS and its neighboring BS, and sends interacting data for the neighboring BS to the identified MS. The neighboring BS coordinating unit 44 is also used to set up a communication channel. The structure of the BS2 is similar to that shown in Fig. 4a, and thus the description thereof is omitted.

Fig. 4b is a schematic block diagram of a MS according to this invention. Referring to Fig. 4b, the MS comprises a transmitting unit 401, a receiving unit 402, a MS first control unit 403 and a MS second control unit 404. The transmitting unit 401 and the receiving unit 402 are used to transmit/receive data, respectively. The MS first control unit 403 is used to process received/transmitted data (if necessary). The MS second control unit 404 transmits interacting data, such as control information for neighboring BS coordination, between the BS and its neighboring BS via a channel to the neighboring BS, or by other methods, such as MAP IE, data burst etc. The MS does not process the interacting data for the neighboring BS from the BS1. It simply transmits the interacting data as it is to the BS2. The interacting data from the BS1 is transparent to the MS.

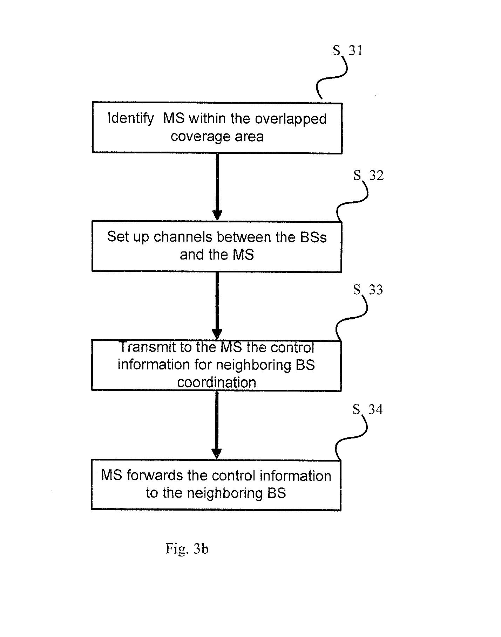

This invention enables the transmission of interacting data between neighboring BSs via a MS, and the interacting data comprises data to be transmitted between the neighboring BSs, such as user data (for example, data to be transmitted to a MS within the coverage area of the neighboring BS, or data sent by a MS within the coverage area of the neighboring BS) and control information for neighboring BS coordination. In the following paragraphs, a flow of forwarding control information will be described with reference to Figs. 3a, 3b, 4a, and 4b, by taking an example of forwarding control information for neighboring BS coordination via a MS.

Referring to Fig. 3b, at S31, the neighboring BS coordination unit 44 of BS1 and the neighboring BS coordination unit of BS2 identify a MS within an overlapped coverage area of the two neighboring BSs, BS1 and BS2, for forwarding control information for coordination, wherein the BS2 is a neighbor to the BS1. Generally, most of neighboring BS coordination exchange is conducted for the MS (e.g. for MS handover) within the overlapped coverage. Although in this example only one MS is shown, it can be understood that more than one MS may be adopted.

Then, at S32, the neighboring BS coordination unit 44 of BS1 sets up a channel between the BS1 and the MS. The neighboring BS coordination unit of BS2 sets up a channel between the MS and the BS1.

Specifically, after the MS within the overlapped coverage area of the neighboring BSs is identified, BS1 sets up a channel between BS1 and the MS for communication, and BS1 transmits a message to the BS2 to notify BS2 to set up a channel with the MS. BS2 sets up a channel for communicating with the MS, when the message from the BS1 is received. The channels between BS1 and MS and between MS and BS2 can be single-directional channel or bi-directional channel, and the channels can be an allocated burst, a dedicated control channel, a CDMA control channel, etc.

Alternatively, a common channel can be established between a plurality of BS2 and a MS. The common channel refers to a channel shared by a plurality of BS2 and between the plurality of BS2 and a MS. At first, the BS1 assigns one resource block, and notifies a plurality of BS2 (such as neighboring BS2) to reserve the same resource block as that assigned by the BS1. Thus, the plurality of BS2 reserve the same resource block as a common channel. The MS may broadcast control information for neighboring BS coordination in uplink via the common channel shared by the plurality of BS2. The MS transmits the control information in uplink via the common channel, and the control information is received by the plurality of BS2.

For example, a CDMA control channel is built such that some time-frequent resource is reserved for control information transmission for one or more MSs within the overlapped coverage area of the BS1 and BS2, and these MSs may use pre-coded CDMA for signaling. Alternatively, a MS is also allowed to use a neighboring BS2's reserved CDMA control channel to communicate with the BS2. CDMA control channel can be used for both downlink and uplink.

A plurality of BSs can be notified of the assigned channel resource, so that they can monitor the common channel and receive the control information forwarded by the MS. Moreover, it is obvious that other channels can also be used for transmitting control information for neighboring BS coordination via a MS.

Since single-directional or bi-directional channels are set up between the neighboring BSs and the MS, respectively, or since a pre-assigned common channel is used, the MS can maintain the channels with the neighboring BS1 and BS2 simultaneously. Therefore, the MS can communicate with the BS1 and BS2 simultaneously without performing a handover process comprising the MS's registration to the BS2. Moreover, there is no need for forwarding the control information for neighboring BS coordination via a backbone, and thus latency required for transmitting the control information can be reduced.

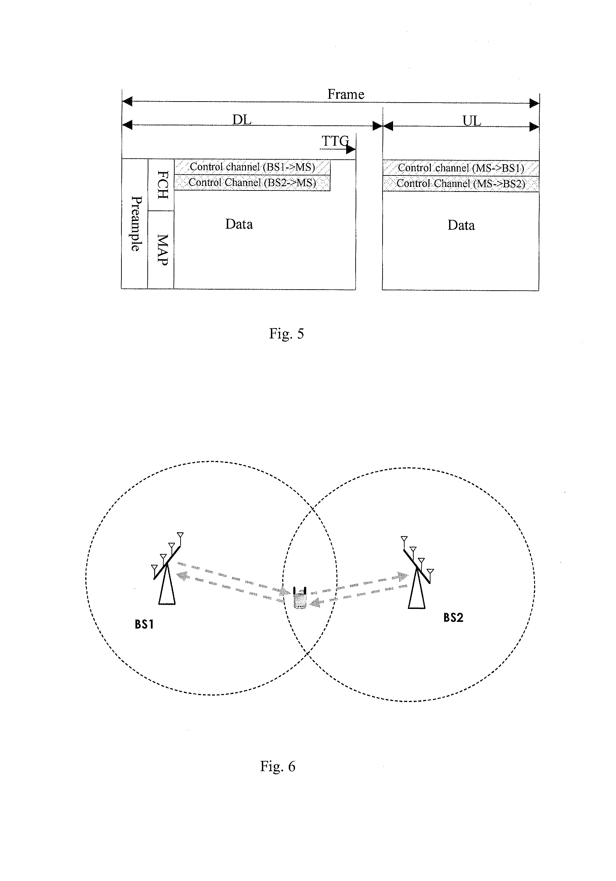

Fig. 6 is a schematic diagram of bi-directional channels between the MS and the BSs according to the present invention. Assume that the MS is registered and subordinate to BS1, and downlink / uplink communications between the MS and BS2 occupy the CDMA control channel assigned by BS2. This control channel is initially assigned for signaling control between BS2 and MSs within its coverage.

In the present invention, the MS is allowed to use the CDMA control channel of the neighboring BS2 to forward the control information for neighboring BS coordination. Fig. 5 is an example of a frame structure for channel assignment. In the frame structure, bi-directional channels are assigned. This is merely an example, and this invention may use any appropriate channels other than the CDMA control channel.

At S33, the transmitting unit 41 of BS1 transmits the control information for neighboring BS coordination to the MS. When a BS has control information to be exchanged, the BS can transmit the control information to the MS via an assigned channel or by other methods, such as MAP IE, data burst, etc.

At S34, the MS second control unit 404 of the MS receives the control information by the receiving unit 402, and forwards the control information to the BS2 via an established channel. The second control unit 404 forwards the control information as it is to the neighboring BS2, without any processing on the control information.

The BS1 may transmit to the MS control information that is encrypted. The control information is transparent to the MS. The MS does not decode the control information to get data contents after receiving the encrypted information. It simply forwards the received information as it is from the BS1 to the neighboring BS2. Depending on the processing capability of the MS, the MS may forward the control information within one frame.

The BS2 receives the control information from the MS. After a channel for communication between the MS and the BS2 is set up, the BS2 knows the existence of the channel and monitors the channel. The BS2 receives the control information when it is transmitted via the monitored channel.

With the MS moving, the channel condition changes, and BS determines whether a channel is required for information exchange. If it is not required, the BS may release the channel. Further, the BS may update the channel according to changes in channel condition.

Although the above is illustrated by an example of forwarding the control information for neighboring BS coordination via a MS, it is understood that interacting data between neighboring BSs can also be transmitted via a MS in the same way The MS does not process the received interacting data for neighboring BSs. Instead, it simply transmits the interacting data as it is from the BS1 to the BS2.

Since single-directional or bi-directional channels are set up between BS1 and the MS as well as between the MS and BS2, the MS can communicates with BS1 by means of any conventional method while communicating with the BS2 via the established channel between them, i.e., communicating with the BS2 without performing handover. Moreover, MS may transmit data of itself to the BS2 besides the interacting data of the neighboring BSs. The data of the MS itself can be, for example, channel measurement result, handover request and MS uplink data. BS2 can also transmit data to the MS for communication. Alternatively, the MS may transmit data to a plurality of BSs via an assigned common channel.

The present invention can be applied to transmission of interacting data with higher time-delay requirement, since it enables to transmit the interacting data of neighboring BSs via a MS. No backbone is required to perform transmission of interacting data between neighboring BSs, and thus the latency of interacting data transmission is reduced. Compared with the conventional BS coordination via a backbone, the BS coordination via a MS is predictable and has less latency, and the communication performance between neighboring BSs is enhanced.

While specific embodiments of the present invention have been illustrated and described, it can be understood that the invention is not limited to the description disclosed herein. It will be apparent to those skilled in the art that various modifications, changes, and variations may be made to the present invention disclosed herein without departing from the spirit and scope of the invention.

## Claims

1. A system for transmitting interacting data between neighboring Base Stations (BSs) via a Mobile Station (MS), comprising:
a first BS which transmits the interacting data; and
a MS which receives the interacting data from the first BS and transmits the received interacting data to a second BS that neighbors to the first BS.

2. The system of claim 1, wherein the interacting data between neighboring BSs comprises control information for neighboring BS coordination.

3. The system of claim 1 or 2, wherein the first BS transmits the interacting data to the MS within the overlapped coverage area of the first BS and the second BS via an established channel.

4. The system of claim 3, wherein the channel between the first BS and the MS is a single-directional or bi-directional channel.

5. The system of claim 3, wherein the channel is one of an allocated burst, a dedicated control channel, a common channel and a CDMA control channel.

6. The system of claim 1, wherein the MS transmits the interacting data received from the first BS to the second BS via an established channel between the MS and the second BS.

7. The system of claims 6, wherein the channel between the second BS and the MS is a single-directional or bi-directional channel.

8. The system of claim 6, wherein the channel is one of an allocated burst, a dedicated control channel, a common channel and a CDMA control channel.

9. The system of claim 6, wherein the MS broadcasts the interacting data from the first BS to a plurality of second BSs via a common channel shared by the plurality of the second BSs as an uplink.

10. A method of transmitting interacting data between neighboring Base Stations (BSs) via a Mobile Station (MS), comprising:
transmitting interacting data from a first BS to a MS; and
transmitting the interacting data received from the first BS from the MS to a second BS that neighbors to the first BS.

11. The method of claim 10, wherein the interacting data between neighboring BSs comprises control information for neighboring BS coordination.

12. The method of claim 10, wherein the first BS transmits the interacting data to the MS within the overlapped coverage area of the first BS and the second BS via an established channel.

13. The method of claim 12, wherein the channel between the first BS and the MS is a single-directional or bi-directional channel.

14. The method of claim 12, wherein the channel is one of an allocated burst, a dedicated control channel, a common channel and a CDMA control channel.

15. The method of claim 10, wherein the MS transmits the interacting data received from the first BS to the second BS via an established channel between the MS and the second BS.

16. The method of claims 15, wherein the channel between the second BS and the MS is a single-directional or bi-directional channel.

17. The method of claim 15, wherein the channel is one of allocated burst, a dedicated control channel, a common channel and a CDMA control channel.

18. The method of claim 17, wherein the common channel is established by:
allocating by the first BS a resource block and notifying it to a plurality of second BSs; and
reserving by each of the plurality of second BSs a resource block identical to the allocated resource block, as the common channel.

19. The method of claim 16, wherein the MS broadcasts the interacting data from the first BS to a plurality of second BSs via a common channel shared by the plurality of the second BSs as an uplink.

20. A communication system, comprising:
a MS;
a first BS which establishes a first communication channel for communication with the MS; and
a second BS which establishes a second communication channel for communication with the MS;
wherein the MS communicates with the first BS using the established first communication channel, and communicates with the second BS using the established second communication channel.

21. The system of claim 20, wherein the MS maintains the first communication channel and the second communication channel simultaneously, so that the MS communicates with both of the first BS and the second BS without any handover.

22. The system of claim 20, wherein the second communication channel is a common communication channel, and data transmitted by the MS via the common channel are received by a plurality of second BSs.

23. A communication method, comprising:
communicating by a MS with a first BS using an established first communication channel; and
communicating by the MS with a second BS using an established second communication channel.

24. The method of claim 23, wherein the MS maintains the first communication channel and the second communication channel simultaneously, so that the MS communicates with both of the first BS and the second BS without any handover.

25. The method of claim 23, wherein the second communication channel is a common channel, and data transmitted by the MS via the common channel is received by a plurality of second BSs, and
the common channel is established by:
allocating by the first BS a resource block and notifying it to a plurality of second BSs; and
reserving by each of the plurality of second BSs a resource block identical to the allocated resource block, as the common channel.

26. A Mobile Station (MS) for transmitting interacting data between neighboring Base Stations (BSs), comprising:
a control unit which controls transmission of interacting data received from a first BS;
a receiving unit which receives the interacting data from the first BS; and
a transmitting unit which transmits to a second BS the interacting data received from the first BS.

27. A Base Station (BS) for transmitting interacting data between it and its neighboring BS, comprising:
a BS coordination unit which controls transmission of interacting data to a MS;
a BS transmitting unit which transmits the interacting data to the MS; and
a BS receiving unit which receives data.
